# EUROPEAN PATENT APPLICATION

(11) **EP 4 095 454 A1**
(43) Date of publication of application: **30.11.2022**
(21) Application number: 20914989.7
(22) Date of filing: 24.01.2020
(51) Int. Cl.: F24F 11/41, F25B 1/00

(54) **AIR CONDITIONER**

(71) Applicant: MITSUBISHI ELECTRIC CORPORATION, Chiyoda-ku Tokyo 100-8310 (JP)
(72) Inventor: MURATA, Kenta, Tokyo 100-8310 (JP); NISHIYAMA, Takumi, Tokyo 100-8310 (JP)
(74) Representative: Pfenning, Meinig & Partner mbB
(86) International application number: PCT/JP2020/002550
(87) International publication number: WO 2021/149247

(57) **Abstract**

An air conditioner (1) comprises: a refrigerant circuit (2) configured to circulate refrigerant through a compressor (10), a condenser (40), an LEV (111) and an evaporator (20); a first temperature sensor (102) configured to sense the temperature of liquid refrigerant at the inlet port of the evaporator (20); and a controller (200) configured to control the compressor (10) and the LEV (111). In a case where a temperature (T1) sensed by the first temperature sensor (101) is lower than a frosting reference temperature, the controller (200) increases the opening degree of the LEV (111) and also increases the operating frequency of the compressor (10) as compared with a case where the temperature (T1) sensed by the first temperature sensor (101) is higher than the frosting reference temperature.

## Description

### TECHNICAL FIELD

The present disclosure relates to an air conditioner.

### BACKGROUND ART

Introduction of a refrigerant mixture has been studied for the purpose of reducing refrigerant's global warming potential (GWP). Refrigerant mixture comprises an azeotropic refrigerant mixture and a non-azeotropic refrigerant mixture. Japanese Patent Application Laying-Open No. 2016-124474 discloses using a non-azeotropic refrigerant mixture having a saturation temperature increasing as dryness increases.

### CITATION LIST

### PATENT LITERATURE

[PTL. 1] Japanese Patent Laying-Open No. 2016-124474

### SUMMARY OF INVENTION

### TECHNICAL PROBLEM

In contrast to a single refrigerant, a non-azeotropic refrigerant mixture has an evaporation temperature varying during a constant-pressure evaporation process even in a two-phase region, and thus presents a so-called temperature gradient.

Let us consider an indoor heat exchanger in an air conditioner in which a cooling operation and a heating operation can be switched by a four-way valve. When the cooling operation and the heating operation are switched by the four-way valve alone, then, from a viewpoint in performance of a heat exchanger, it is normally configured that, in an indoor heat exchanger, refrigerant and air flow in opposite directions in the heating operation and flow in parallel directions in the cooling operation.

When a non-azeotropic refrigerant mixture is used in an air conditioner having such a configuration, an evaporator has a refrigerant inlet port temperature lower than a refrigerant outlet port temperature due to a temperature gradient. Depending on the air blowing temperature and the room temperature, the evaporator may have an inlet port temperature falling to 0°C or lower, and there is a possibility that frost may form on the side of the refrigerant inlet port of the heat exchanger of the indoor unit during the cooling operation.

The present disclosure has been made to address the above-described issue, and discloses an air conditioner which reduces a possibility of frosting.

### SOLUTION TO PROBLEM

The present disclosure relates to an air conditioner. The air conditioner comprises: a refrigerant circuit configured to circulate refrigerant through a compressor, a condenser, an expansion valve and an evaporator; a first temperature sensor configured to sense the temperature of liquid refrigerant at an inlet port of the evaporator; and a controller configured to control the compressor and the expansion valve. In a case where the temperature sensed by the first temperature sensor is lower than a frosting reference temperature, the controller is configured to increase an opening degree of the expansion valve and increase an operating frequency of the compressor as compared with a case where the temperature sensed by the first temperature sensor is higher than the frosting reference temperature.

### ADVANTAGEOUS EFFECTS OF INVENTION

The presently disclosed air conditioner can reduce a possibility that the evaporator frosts by adjusting the opening degree of the expansion valve and the operating frequency of the compressor.

### BRIEF DESCRIPTION OF DRAWINGS

Fig. 1 is a diagram showing a configuration of an air conditioner according to a first embodiment.
Fig. 2 is a diagram showing a relationship among a position in an indoor unit, a temperature of air, and a temperature of refrigerant.
Fig. 3 is a P-H line diagram of the air conditioner according to the first embodiment using a non-azeotropic refrigerant mixture.
Fig. 4 is a flowchart for illustrating control executed by a controller 200 in the first embodiment.
Fig. 5 is a diagram showing a configuration of an air conditioner 301 according to a second embodiment.
Fig. 6 is a P-H line diagram when passing through a first channel and that when passing through a second channel.
Fig. 7 is a flowchart for illustrating control executed by controller 200 in the second embodiment.

### DESCRIPTION OF EMBODIMENTS

Hereinafter, embodiments of the present disclosure will be described in detail with reference to the drawings. Hereinafter, while a plurality of embodiments will be described, the configurations described in the embodiments are intended to be combined together, as appropriate, in the present application as originally filed. In the figures, identical or corresponding components are identically denoted and will not be described redundantly. The figures may show components in a relationship in size different from their actual relationship in size.

### First Embodiment

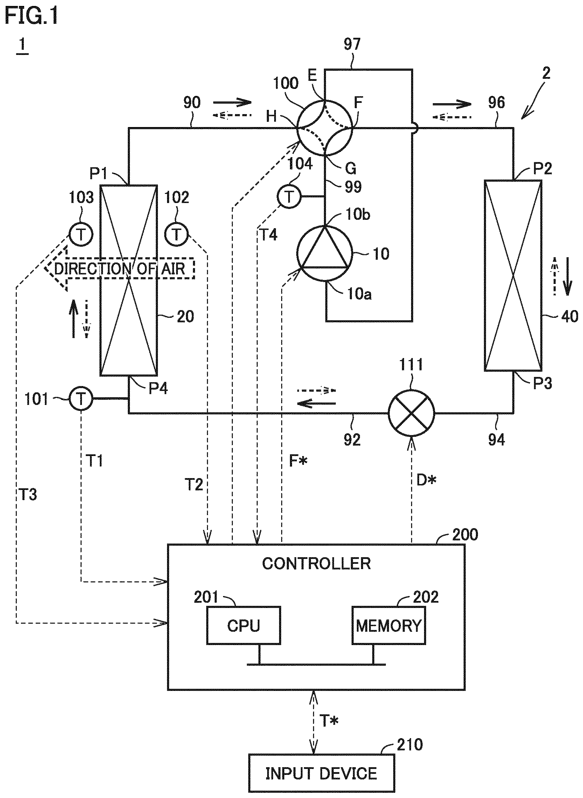

Fig. 1 is a diagram showing a configuration of an air conditioner according to a first embodiment. An air conditioner 1 comprises a compressor 10, an indoor heat exchanger 20, a linear expansion valve (LEV) 111, an outdoor heat exchanger 40, pipes 90, 92, 94, 96, 97 and 99, and a four-way valve 100. Four-way valve 100 has ports E to H.

Pipe 90 is connected between port H of four-way valve 100 and a port P1 of indoor heat exchanger 20. Pipe 92 is connected between a port P4 of indoor heat exchanger 20 and LEV 111. Pipe 94 is connected between LEV 111 and a port P3 of outdoor heat exchanger 40.

Pipe 96 is connected between a port P2 of outdoor heat exchanger 40 and port F of four-way valve 100. Pipe 97 is connected between a refrigerant inlet port 10a of compressor 10 and port E of four-way valve 100. Pipe 99 is connected between a refrigerant outlet port 10b of compressor 10 and port G of four-way valve 100, and provided at some midpoint thereof with a temperature sensor 104 configured to measure refrigerant temperature.

Air conditioner 1 further comprises temperature sensors 101 to 103 and a controller 200. Controller 200 controls compressor 10, four-way valve 100, and LEV 111 in response to an operation command signal provided by a user and outputs of variety of types of sensors.

Controller 200 comprises a CPU (Central Processing Unit) 201, a memory 202 (ROM (Read Only Memory) and RAM (Random Access Memory)), an input/output buffer (not shown), and the like. CPU 201 loads a program, which is stored in the ROM, in the RAM or the like and executes the program. The program stored in the ROM is a program describing a procedure of a process to be performed by controller 200. Controller 200 executes control of each device in air conditioner 1 in accordance with these programs. This control is not limited to processing by software, and processing by dedicated hardware (electronic circuity) is also possible.

Compressor 10 is configured to change its operating frequency in response to a control signal F^{∗} received from controller 200. Specifically, compressor 10 incorporates a drive motor inverter-controlled and variable in rotational speed, and when the operating frequency of compressor 10 is changed, the rotational speed of the drive motor changes. The output of compressor 10 is adjusted by changing the operating frequency of compressor 10. Compressor 10 may be of various types, for example, a rotary type, a reciprocating type, a scroll type, a screw type, or the like.

Four-way valve 100 is controlled by a control signal received from controller 200 to have either a state A (a cooling operation state) or a state B (a heating operation state). State A is a state with port E and port H in communication and port F and port G in communication. State B is a state with port E and port F in communication and port H and port G in communication. By operating compressor 10 in state A (or the cooling operation state), refrigerant circulates through the refrigerant circuit in a direction indicated by a solid arrow. By operating compressor 10 in state B (or the heating operation state), refrigerant circulates through the refrigerant circuit in a direction indicated by a broken line arrow.

LEV 111 normally has a degree of opening, as controlled by a control signal received from controller 200, to adjust SH (superheat: a degree of heating) of refrigerant at the outlet port of the evaporator.

Further, in the present embodiment, when there is a high possibility of frosting, LEV 11 is additionally controlled to have a somewhat larger degree of opening than when the LEV is normally controlled to adjust the SH as described above. (Alternatively, a thermistor is installed at the inlet port of the indoor heat exchange, and the opening degree of LEV 11 is adjusted so that the temperature of the thermistor does not fall below 0°C.) This prevents frosting in the vicinity of the refrigerant inlet port of the indoor unit when there is a high possibility of frosting. And in order to maintain refrigeration capacity, controller 200 sets the compressor's frequency to be high so as to achieve a targeted air-blowing temperature.

Let us consider an indoor heat exchanger under a cooling condition with a non-azeotropic refrigerant mixture having a temperature gradient.

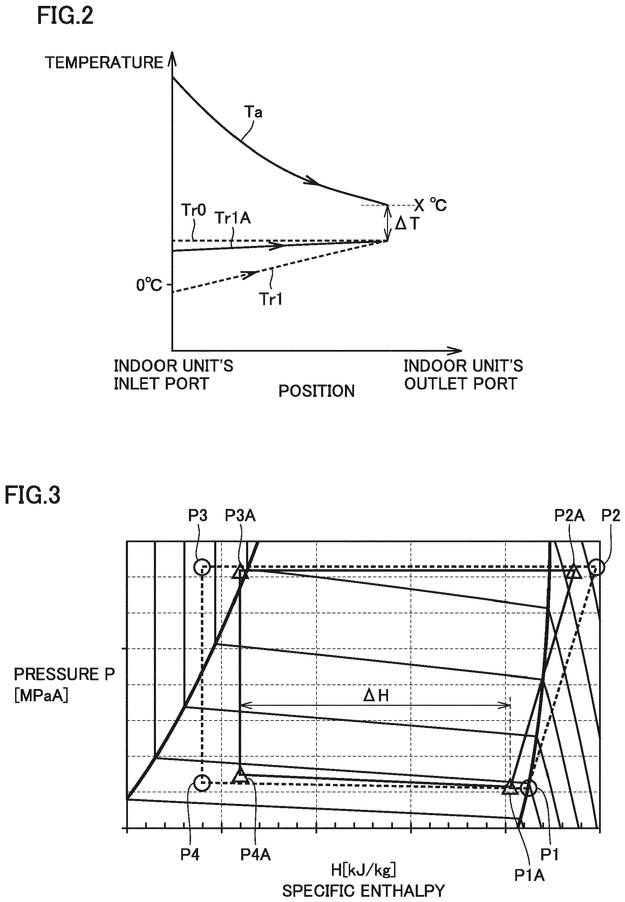

Fig. 2 is a diagram showing a relationship among a position in an indoor unit, a temperature of air, and a temperature of refrigerant. When a single refrigerant is used with the indoor unit having a low air-blowing temperature for example of X°C, the refrigerant presents a uniform temperature distribution of (X - ΔT)°C, as indicated in Fig. 2 by a refrigerant temperature Tr0, from the indoor unit's refrigerant inlet port to a vicinity of its refrigerant outlet port. In a normal cooling operation, air-blowing temperature X°C is determined by a user's setting of a remote controller or the like. In a cooling operation, in order to lower an air-blowing temperature to a set temperature, refrigerant temperature is set to be lower than the set temperature by ΔT°C. When the setting of the air-blowing temperature is lowered, then, in order to ensure a temperature difference between refrigerant's outlet port temperature and the air-blowing temperature, LEV 11 is controlled so that the evaporation temperature follows at a temperature lower than the set temperature by ΔT. Specifically, LEV 11 is controlled to have a discharging temperature at a target temperature. The target temperature for the discharging temperature is determined based on a target temperature for the evaporation temperature or a target temperature for the air-blowing temperature.

In contrast, the non-azeotropic refrigerant mixture has an inlet port temperature lower than an outlet port temperature due to the temperature gradient. When the refrigerant's outlet port temperature is caused to follow the air-blowing temperature, the refrigerant's inlet port temperature becomes further lower as indicated by a refrigerant temperature Tr1. Depending on the setting of the air-blowing temperature X°C and the room temperature, as indicated in Fig. 2 by refrigerant temperature Tr1, the evaporator's inlet port temperature decreases to be close to 0°C, and there is a possibility that, under a cooling condition, frost may form in a vicinity of the refrigerant inlet port of the heat exchanger (or evaporator) of the indoor unit.

For example, in a dehumidifying operation, refrigerant temperature (or evaporation temperature) is lowered to be lower than in the normal cooling operation to actively condense indoor air. Therefore, in the dehumidifying operation, an air blowing temperature lower than that in the cooling operation is set. Therefore, ΔT is set to be large, resulting in a further increased possibility of frosting.

In order to avoid such frosting in the vicinity of the refrigerant inlet port of the indoor unit during the cooling operation, in the present embodiment, the control is changed as follows:

Initially, the temperature difference between the refrigerant outlet and inlet ports of the indoor unit, that is, the temperature gradient, is reduced. In order to do so, when there is a high possibility of frosting, LEV 111 is opened more than normal to reduce an enthalpy difference ΔH between the refrigerant outlet and inlet ports of the indoor unit and hence a saturation temperature difference between the inlet and outlet ports of the indoor unit (or evaporator). This changes refrigerant temperature from Trl to Tr1A as shown in Fig. 2, and even if a temperature difference ΔT is ensured at the refrigerant outlet port of the indoor unit, the vicinity of the refrigerant inlet port of the indoor unit can avoid having a temperature of a negative value.

However, enthalpy difference ΔH in the evaporator is smaller than normal, and accordingly, the operating frequency of compressor 10 is also increased to provide an increased refrigerant flow rate to ensure refrigeration capacity equivalent to that as normal.

Variation of enthalpy difference ΔH will be described below. Fig. 3 is a P-H line diagram of the air conditioner according to the first embodiment using a non-azeotropic refrigerant mixture. Referring to Fig. 3, a broken line P1-P2-P3-P4-P1 indicates a refrigeration cycle when conventional control is executed. In contrast, a solid line P1A-P2A-P3A-P4A-P1A indicates a refrigeration cycle in the air conditioner according to the first embodiment.

When LEV 111 is opened more than normal, point P4 of the refrigerant inlet port of the evaporator moves to point P4A, and point P1 of the refrigerant outlet port thereof moves to point P1A. As a result, enthalpy difference ΔH decreases. Accordingly, in order to compensate for the reduction of enthalpy difference ΔH and maintain the same refrigeration capacity, the operating frequency of compressor 10 is increased to circulate refrigerant in an increased amount.

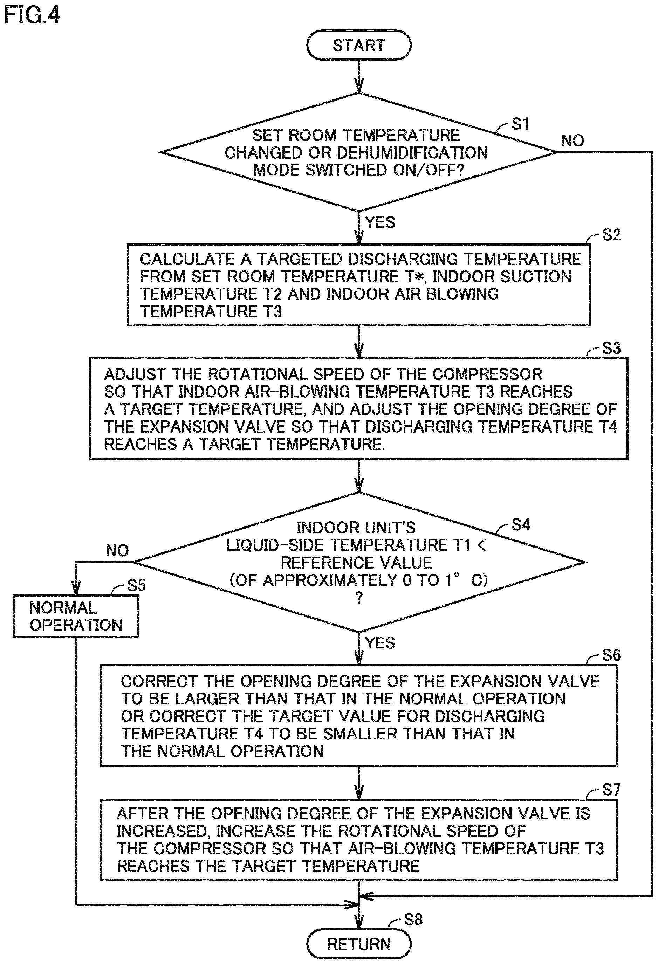

Fig. 4 is a flowchart for illustrating control executed by controller 200 in the first embodiment.

Referring to Figs. 1 and 4, in step S1, controller 200 determines whether a user has changed a set temperature via input device 210 or switched on/off a dehumidification mode. When there is no such change in input setting (NO in S1), the process proceeds to step S8, and input via the input device is awaited again.

In contrast, when the input setting has been changed (YES in S1), then, in step S2, controller 200 reads a target temperature T^{∗}, which is a set room temperature, from input device 210, an indoor suction temperature T2 from temperature sensor 102, and an indoor air blowing temperature T3 from temperature sensor 103, and uses these temperatures to calculate a target temperature T4^{∗} for a discharging temperature T4 of compressor 10.

Subsequently, in step S3, controller 200 changes the operating frequency of compressor 10 to adjust the rotational speed of the drive motor of compressor 10 so that indoor air-blowing temperature T3 reaches a target temperature T3^{∗}. Further, controller 200 adjusts the opening degree of LEV 111 so that discharging temperature T4 is target temperature T4^{∗}.

Further, in step S4, controller 200 determines whether indoor heat exchanger 20 has a liquid-side temperature T1 smaller than a reference value. The reference value is, for example, about 0 to 1°C. When temperature T1 is equal to or higher than the reference value (NO in S4), it is determined that there is no risk of frosting of indoor heat exchanger 20, and a normal operation is performed in step S5 with the opening degree of LEV 111 and rotational speed of the drive motor of compressor 10 as determined in step S3.

In contrast, when temperature T1 is lower than the reference value (YES in S4), frost may form in the vicinity of the inlet port of indoor heat exchanger 20. Accordingly, in step S6, controller 200 sets the opening degree of LEV 111 to be larger than that in the normal operation, or corrects the target value for discharging temperature T4 to be smaller than that in the normal operation.

Further, in step S7, after controller 200 increases the opening degree of LEV 111 to be larger than that in the normal operation, controller 200 increases the operating frequency of compressor 10 to increase the rotational speed of the motor so that air-blowing temperature T3 reaches the target temperature.

The first embodiment described above will be summarized with reference to the drawings. Air conditioner shown in Fig. 1 comprises: refrigerant circuit 2 configured to circulate refrigerant through compressor 10, a condenser (outdoor heat exchanger 40), LEV 111 and an evaporator (indoor heat exchanger 20); first temperature sensor 101 configured to sense the temperature of liquid refrigerant at the inlet port of the evaporator (indoor heat exchanger 20); and controller 200 configured to control compressor 10 and LEV 111.

When temperature T1 sensed by first temperature sensor 101 is lower than the frosting reference temperature, controller 200 increases the opening degree of LEV 111 and the operating frequency of compressor 10 to be larger than when temperature T1 sensed by first temperature sensor 101 is higher than the frosting reference temperature.

Thus increasing the opening degree of LEV 111 can reduce enthalpy difference ΔH between the refrigerant inlet and outlet ports of the evaporator (indoor heat exchanger 20), and hence a difference in temperature between the refrigerant inlet and outlet ports of the evaporator (indoor heat exchanger 20), as shown in Fig. 3.

Such control can prevent temperature T1 on the side of the refrigerant inlet port of the evaporator (indoor heat exchanger 20) from dropping to a temperature at which there is a possibility of frosting, and also maintain refrigeration capacity of air conditioner 1 as it is.

Preferably, when temperature T1 sensed by first temperature sensor 101 changes from a temperature higher than the frosting reference temperature to a temperature lower than the frosting reference temperature, then, controller 200 increases the opening degree of LEV 111 and thereafter increases the operating frequency of compressor 10, as indicated in Fig. 4 by steps S6 and S7.

Initially increasing the operating frequency of compressor 10 would increase refrigeration capacity, and also further decrease the temperature of the refrigerant inlet port of the evaporator, resulting in an increased possibility of frosting. Therefore, it is better to initially increase the opening degree of LEV 111 and thereafter increase the operating frequency of compressor 10.

Preferably, as shown in Fig. 1, air conditioner 1 further comprises second temperature sensor 102 configured to sense temperature T2 of air flowing toward the evaporator (indoor heat exchanger 20), third temperature sensor 103 configured to sense temperature T3 of air flowing from the evaporator (indoor heat exchanger 20), and input device 210 configured to set target temperature T^{∗} for room temperature. When temperature T1 sensed by first temperature sensor 101 is higher than the frosting reference temperature (NO in S4), controller 200 determines an opening degree for LEV 111 and an operating frequency for compressor 10 based on temperature T2 sensed by second temperature sensor 102, temperature T3 sensed by third temperature sensor 103 and target temperature T^{∗} (S3), and applies them to a normal operation as they are (S5).

The opening degree of LEV 111 and the operating frequency of compressor 10 thus determined and applied to the normal operation are set to appropriate values from a viewpoint of reducing power consumption and the like. In contrast, when there is a risk of frosting, an opening degree for LEV 111 and an operating frequency for compressor 10 for operation are set to reduce ΔH to avoid frosting although such setting deviates from normal setting.

### Second Embodiment

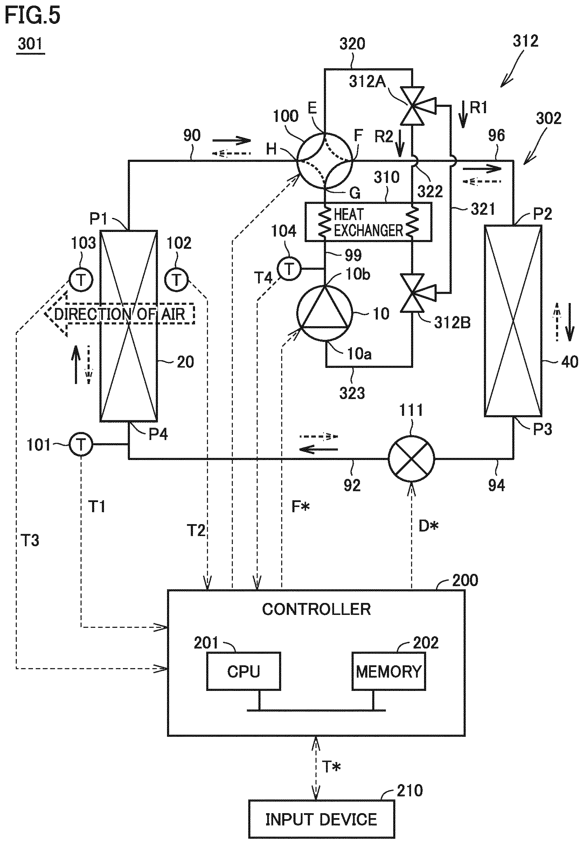

Fig. 5 is a diagram showing a configuration of an air conditioner 301 according to a second embodiment. Air conditioner 301 comprises a refrigerant circuit 302 instead of refrigerant circuit 2 shown in Fig. 1. As well as refrigerant circuit 2, refrigerant circuit 302 is also configured to circulate refrigerant through compressor 10, a condenser (outdoor heat exchanger 40), LEV 111, and an evaporator (indoor heat exchanger 20).

In addition to the configuration of refrigerant circuit 2 shown in Fig. 1, refrigerant circuit 302 further comprises a first channel 321 and a second channel 322 provided in parallel between the evaporator (indoor heat exchanger 20) and refrigerant inlet port 10a of compressor 10, a channel selector 312 configured to selectively pass refrigerant through one of first channel 321 and second channel 322, and a heat exchanger 310 configured to exchange heat between refrigerant passing through second channel 322 and refrigerant discharged by compressor 10.

In Fig. 5, channel selector 312 is configured including a three-way valve 312A and a three-way valve 312B. However, the configuration of channel selector 312 is not limited to the configuration shown in Fig. 5. For example, either three-way valve 312A or three-way valve 312B may be a simple branching or junction point without a valve.

When temperature T1 sensed by first temperature sensor 101 is lower than the frosting reference temperature, controller 200 increases the opening degree of LEV 111 to be larger and increases the operating frequency of compressor 10 to be larger than in the normal operation, than when temperature T1 sensed by first temperature sensor 101 is higher than the frosting reference temperature.

Together with this, when temperature T1 sensed by first temperature sensor 101 is lower than the frosting reference temperature, controller 200 controls channel selector 312 to select second channel 322.

In the first embodiment, refrigerant sucked into compressor 10 becomes humid refrigerant, and compressor 10 deteriorates in reliability. A package air conditioner has an accumulator, which prevents liquid from returning (back) to compressor 10, whereas a room air conditioner is often not provided with an accumulator. Accordingly, in the second embodiment, in order to prevent liquid from returning back, when an operation of decreasing an air-blowing temperature is performed, a path which allows heat exchange between refrigerant before it is sucked into compressor 10 and that after it is discharged therefrom is selected as indicated in Fig. 5 by an arrow R2.

Thus, when there is a risk of frosting, second channel 322 (indicated by arrow R2) that allows heat exchange between refrigerant before it is sucked and refrigerant after it is discharged can be selected to reduce a temperature difference between the outlet and inlet ports of the evaporator while preventing liquid from returning back to the compressor. When there is no concern about frosting, refrigerant is passed through first channel 321 as indicated by an arrow R1 in order to increase enthalpy difference.

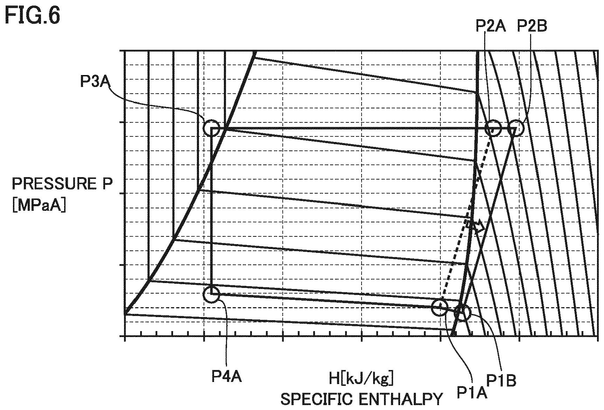

Fig. 6 is a P-H line diagram when passing through the first channel and that when passing through the second channel. When first channel 321 shown in Fig. 5 is selected, refrigerant at the suction port of compressor 10 has a state corresponding to point P1A, and refrigerant at the discharging port thereof has a state corresponding to point P2A. In contrast, when second channel 322 shown in Fig. 5 is selected, heat exchanger 310 performs heat exchange, and as a result, point P1A moves to point P1B, and point P2A moves to point P2B. As a result, point P1A present in a two-phase region moves to point P1B present in a gas phase region, and there is no concern that compressor 10 sucks liquid refrigerant.

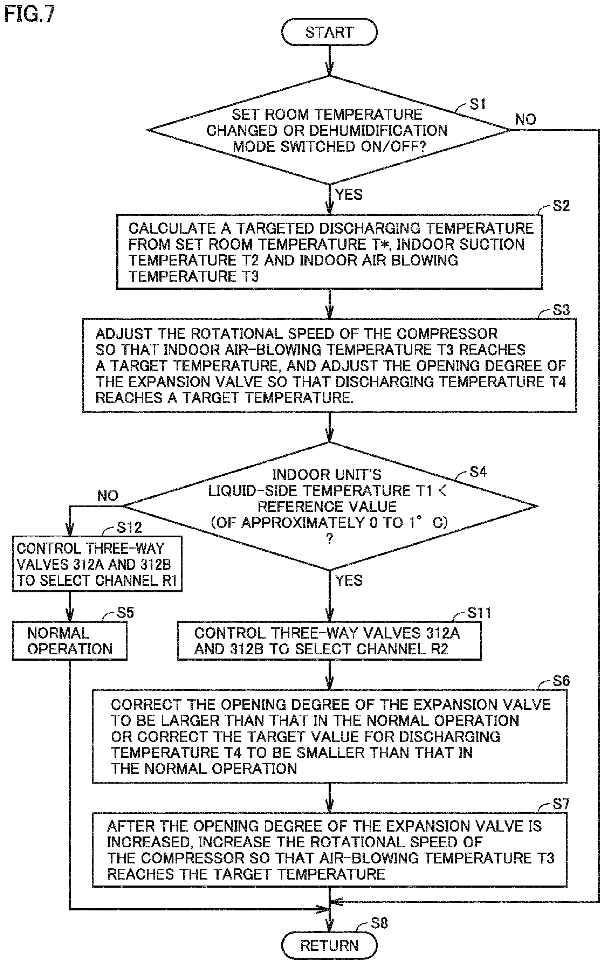

Fig. 7 is a flowchart for illustrating control executed by controller 200 in the second embodiment. The Fig. 7 flowchart corresponds to the Fig. 4 flowchart plus steps S11 and S12. The process has a remainder which is identical to that of Fig. 4, and accordingly, will not be described repeatedly.

In response to NO in step S4, step S11 is performed to control three-way valves 312A and 312B to select second channel 322 (as indicated by arrow R2). In contrast, in response to YES in step S4, step S12 is performed to control three-way valves 312A and 312B to select first channel 321 (as indicated by arrow R1).

The air conditioner according to the second embodiment is configured such that a passage of refrigerant before it is sucked into the compressor is divided into first channel 321 and second channel 322, and second channel 322 allows heat exchanger 310 to perform heat exchange with discharged refrigerant. In addition to an effect provided by the air conditioner of the first embodiment, this can prevent liquid from returning back to compressor 10, and thus enhance reliability.

It should be understood that the embodiments disclosed herein have been described for the purpose of illustration only and in a non-restrictive manner in any respect. The scope of the present disclosure is defined by the terms of the claims, rather than the embodiments description above, and is intended to include any modifications within the meaning and scope equivalent to the terms of the claims.

### REFERENCE SIGNS LIST

1, 301 air conditioner, 2, 302 refrigerant circuit, 10 compressor, 10a refrigerant inlet port, 10b refrigerant outlet port, 20 indoor heat exchanger, 40 outdoor heat exchanger, 90, 92, 94, 96, 97, 99 pipe, 100 four-way valve, 101, 102, 103, 104 temperature sensor, 200 controller, 201 CPU, 202 memory, 210 input device, 310 heat exchanger, 312 channel selector, 312A, 312B three-way valve, 321, 322 channel, E, F, G, H, P1, P2, P3 port.

## Claims

1. An air conditioner comprising:
a refrigerant circuit configured to circulate refrigerant through a compressor, a condenser, an expansion valve, and an evaporator;
a first temperature sensor configured to sense a temperature of liquid refrigerant at an inlet port of the evaporator; and
a controller configured to control the compressor and the expansion valve, wherein
in a case where the temperature sensed by the first temperature sensor is lower than a frosting reference temperature, the controller is configured to increase an opening degree of the expansion valve and increase an operating frequency of the compressor as compared with a case where the temperature sensed by the first temperature sensor is higher than the frosting reference temperature.

2. The air conditioner according to claim 1, wherein when the temperature sensed by the first temperature sensor changes from a temperature higher than the frosting reference temperature to a temperature lower than the frosting reference temperature, the controller is configured to increase the opening degree of the expansion valve and thereafter increase the operating frequency of the compressor.

3. The air conditioner according to claim 1 or 2, further comprising:
a second temperature sensor configured to sense a temperature of air flowing toward the evaporator;
a third temperature sensor configured to sense a temperature of air flowing from the evaporator; and
an input device configured to set a target temperature for a space to be air-conditioned, wherein
when the temperature sensed by the first temperature sensor is higher than the frosting reference temperature, the controller is configured to determine the opening degree of the expansion valve and the operating frequency of the compressor based on the temperature sensed by the second temperature sensor, the temperature sensed by the third temperature sensor, and the target temperature.

4. The air conditioner according to any one of claims 1 to 3, wherein
the refrigerant circuit comprises
a first channel and a second channel provided in parallel between the evaporator and a suction port of the compressor,
a channel selector configured to selectively pass refrigerant through one of the first channel and the second channel, and
a heat exchanger configured to exchange heat between refrigerant passing through the second channel and refrigerant discharged by the compressor, and
when the temperature sensed by the first temperature sensor is lower than the frosting reference temperature, the controller is configured to control the channel selector to select the second channel.
